# EUROPEAN PATENT APPLICATION

(11) **EP 3 156 226 A1**
(43) Date of publication of application: **19.04.2017**
(21) Application number: 14830488.4
(22) Date of filing: 16.06.2014
(51) Int. Cl.: B32B 27/00, B32B 38/14, B32B 37/12, B29C 45/14, G02B 6/00

(54) **DECORATIVE LIGHT-GUIDING COMPOSITE SHEET AND COMPONENT THEREOF**

(71) Applicant: Hwang, Yu-chen, Xinwu Township, Taoyuan County 327 (TW); Chen, Chih En, Taiwan 408 (CN)
(72) Inventor: Hwang, Yu-chen, Xinwu Township, Taoyuan County 327 (TW); Chen, Chih En, Taiwan 408 (CN)
(74) Representative: Schwerbrock, Florian
(86) International application number: PCT/CN2014/000586
(87) International publication number: WO 2015/192262

(57) **Abstract**

A light guiding decorative lamination sheet includes a transparent substrate with concave and convex structures on the surface. At least one edge is thicker than center of the substrate. The cross section of the edge is in horn shape. The substrate is coated with a printed layer and a hard coat on the concave and convex surface. There is an adhesion layer on the other side of the substrate. The hard coat side faces to one surface of a pair of match molds and followed by a resin injection process unto the adhesion layer. The other surface of the mold may optionally have microstructures which can be transferred to the surface of injected resin. The light emitting diode is placed beside the horn shape edge of the substrate to form the corresponding light guiding decorative composite sheet. A heat resistant layer, which has a softening temperature at least 10 °C higher than the injected molten resin, may be placed between adhesion layer and transparent substrate. The resulting sheet has three-dimensional visual effect and light guiding and lighting functions.

## Description

### BACKGROUND

Traditional in mold decoration (IMD) process is the integrated process of printing, thermal forming and resin injection molding. Although there are slight variations in materials used in IMR (in-mold roller) /IML (in-mold labeling) /IMF (in-mold film), the principles are still the same. In general, IMD process includes three steps: printing, thermal forming and resin inject molding. Printing process is chosen from digital printing, screen printing, tempo printing or thermo printings to result in a decorative film. Thermal forming process pre-forms the decorative film into a desired shape by applying temperature and die pressing. Resin inject molding process is to fill the cavity inside of the match mold with polymer material. The resulting parts are for decoration only, no light guiding or lighting functions.

Published Taiwan patent application 201018581 by Entire Company disclosed substrate with surface structures for easy bending and flexibility. No stereoscopic visual effect or light guiding effects were disclosed. In order to prevent the surface structures from deformation and causing appearance issue during the resin injection process, surface structures were made of thermoset materials. Therefore, the elongation of film is limited to the thermoset surface structures. In addition, printing layer is at the opposite side to the surface structure. Therefore, no stereoscopic effect was obtained.

It is clear to see that there are needs of improving IMD film for more appealing decoration effect and retain the substrate flexibility with thermoplastic materials. These are important to expand the adoption of IMD technology to wider application range.

### BRIEF SUMMARY

In these teachings the structures and manufacturing process of light guiding decorative composite sheet and components are disclosed. In addition to surface decoration function, these components have light guiding and lighting effect. They can be used for surface decoration of cell phone, key board, notebook computer, calculator, information and communication devices, automotive, appliance, game device, house ware, stationary and sporting goods.

### BRIEF DESCRIPTION OF THE DRAWINGS

FIG. 1 is a structural diagram showing straight external printed decoration sheet.
FIG. 2 is a structural diagram showing a variation of straight external printed decoration sheet of FIG. 1.
FIG. 3 is a schematic diagram showing a component made of straight external printed decoration sheet FIG. 2.
FIG. 4 is a schematic diagram showing a component made of straight inner printed decoration sheet.
FIG. 5 is a schematic diagram showing a component made of horn shape decoration sheet.
FIG. 6 is a schematic diagram showing a variation of component FIG.3 with single sided structured plastic part.
FIG. 7 is a schematic diagram showing a variation of component FIG.3 with double sided structured plastic part.

### Description of key elements

- 1 :: single sided structured transparent substrate
- 2 :: surface treatment layer
- 3 :: printed layer
- 4 :: hard coating layer
- 5 :: heat resistant layer
- 6 :: adhesion layer
- 7 :: double sided structured transparent substrate
- 8 :: plastic part
- 9 :: light source
- 10 :: horn shape substrate
- 11 :: single sided structured plastic part
- 12 :: reflective layer
- 13 :: double sided structured plastic part
- 100, 200 :: straight external printed decoration sheet
- 300 :: straight inner printed decoration sheet
- 400 :: horn shape decoration sheet

### DETAILED DESCRIPTION

In these teachings, a light guiding decorative lamination sheet and components made thereof have not only stereoscopic printed effect but also light guiding and lighting effects.

These teachings of light guiding decorative composite sheets are accomplished through the following methods. A light guiding decorative composite sheet comprises a transparent substrate with concave and convex surface structures. At least one edge of the transparent substrate is in horn shape at cross section and thicker than the center area. In addition, there are a printed layer and a hard coating layer on top of the concave and convex surface structures. Further, an adhesive layer is on the other surface of the transparent substrate.

The purpose of this teaching can also be accomplished by using the prior mentioned light guiding decorative composite sheet wherein the transparent substrate has concave and convex surface structures on both sides of the transparent substrate with the surface height difference between 1µm and 100µm.

It is preferred that the concave and convex surface structures are selected from lines, prism, half spherical, half cylindrical, pyramidal, Fresnel structure or are a combination of two or more of the above.

It is preferred that the adhesive is a hot melt adhesive.

It is preferred that the edge thickness of the transparent substrate is equal or larger than the diameter of light emitting diode.

This teaching can also be accomplished through the following methods. A light guiding decorative composite sheet comprises a transparent substrate with concave and convex surface structures. At least one edge of the transparent substrate is in horn shape at cross section and thicker than the center area. In addition, there are a printed layer on top of the concave, and convex surface structures and an adhesive layer on top of the printed layer. Further, a hard coating layer is on the other surface of the transparent substrate.

The purpose of this teaching can also be accomplished by using the prior mentioned light guiding decorative composite sheet wherein the transparent substrate has concave and convex surface structures on both sides of the transparent substrate with the surface height difference between 1µm and 100µm.

It is preferred that the concave and convex surface structures are selected from lines, prism, half spherical, half cylindrical, pyramidal, Fresnel structure or are a combination of two or more of the above.

It is preferred that the adhesive is a hot melt adhesive.

It is preferred that the edge thickness of the transparent substrate is equal or larger than the diameter of light emitting diode.

This teaching of light guiding decorative components is accomplished through the following process. A light guiding decorative component utilizes the prior mentioned light guiding decorative composite sheets with the hard coating layer facing a mold surface. A transparent resin is injected onto the adhesive layer to provide a light guiding decorative injected plastic part. Additionally, light emitting diodes are placed next to horn shape edge of transparent substrate. The density of concave and convex surface structures is not uniform, less structures at the diode side. Furthermore, a heat resistant layer is located between the adhesive layer and the transparent substrate, wherein the heat distortion temperature of the heat resistant layer is at least 10°C higher than the injected resin temperature.

It is preferred that the heat resistant layer has light reflective effect and is selected from translucent material, material with metal powder containing, metalized sheet or high refraction index coating materials.

It is preferred that the transparent resin is selected from polymethylmethacrylate or acrylonitrile butadiene styrene copolymers. The heat resistant layer is polycarbonate, polyurethane or acrylonitrile butadiene styrene copolymers.

This teaching of light guiding decorative components is also accomplished through the following process. A light guiding decorative component utilizes the prior mentioned light guiding decorative composite sheets with the hard coating layer facing a mold surface. A transparent resin is injected onto the adhesive layer to provide a light guiding decorative injected plastic part. In addition, the transparent resin duplicates the lens structures from the other side of the mold. Light emitting diodes are placed next to the resin injected plastic part. The density of lens structures is not uniform, less structures at the diode side. Furthermore, a heat resistant layer is located between the adhesive layer and the transparent substrate and the heat distortion temperature of the heat resistant layer is at least 10°C higher than the injected resin temperature.

It is preferred that the edges of the injected plastic part also duplicate the lens structures from the mold.

It is preferred that the transparent resin is selected from polymethylmethacrylate or acrylonitrile butadiene styrene copolymers. The heat resistant layer is polycarbonate, polyurethane or acrylonitrile butadiene styrene copolymers.

It is preferred that the heat resistant layer has light reflective effect and is selected from translucent material, material with metal powder containing, metalized sheet or high refraction index coating materials.

This teaching of light guiding decorative components is also accomplished through the following process. A light guiding decorative component utilizes the prior mentioned light guiding decorative composite sheets with the adhesive layer bonding to the surface of a light guiding plastic part. Light emitting diodes are placed next to the horn shape edge of the transparent substrate. The density of concave and convex surface structures is not uniform, less structures at the diode side.

This teaching of light guiding decorative components is also accomplished through the following process. A light guiding decorative component utilizes the prior mentioned light guiding decorative composite sheets with the adhesive layer bonding to the surface of a light guiding plastic part. There are pre-formed lens structures at one side or both sides of the light guiding plastic part. Light emitting diodes are placed next to the light guiding plastic part. The density of the lens structures is not uniform, less structures at the diode side.

A method of manufacturing prior mentioned transparent substrate with concave and convex surface structures comprising:
1. using a roller carved with micro structures on the roller surface.
2. maintaining the roller temperature ± 20°C higher than the softening temperature of a plastic sheet.
3. pressing the heated roller over one side of the plastic sheet to duplicate the micro structures to the plastic sheet.
4. passing the resulting plastic sheet over a chilling roller to set the micro structures. This results in single sided structured transparent substrate.
5. followed by coating a heat resistant layer on top of the micro structures wherein the softening temperature of the heat resistant layer is at least 10°C higher than the temperature of second heated roller, wherein the second heated roller is also carved with micro structures on the roller surface.
6. maintaining the temperature of the second heated roller 10°C to 30°C higher than the temperature of the first heated roller.
7. pressing the second heated roller over the other side of the plastic sheet to duplicate the micro structures to the plastic sheet.
8. passing the resulting plastic sheet over a chilling roller to set the micro structures. This results in double sided structured transparent substrate.

It is preferred that the prior mentioned transparent substrate with concave and convex surface structures wherein the microstructures are selected from lines, prism, half spherical, half cylindrical, pyramidal, Fresnel structure or are a combination of two or more of the above.

This teaching of light guiding decorative components has the following benefits and values. The printing is on concave and convex surface structures. The concave and convex surface not only provides the stereoscopic printed effect, but also guides the edge light source of light emitting diode to emit through the concave and convex surface. This results in a decorative composite sheet with light guiding and lighting function. This can be used for decorative housing of mobile devices. Through the integration of several lighting locations, different light colors and different light flashing mode, light guiding decorative component provides a way of communication of the devise with the users, for examples: the incoming information type, caller, important messages and etc. These teachings can be applied to surface decoration of cell phone, key board, notebook computer, calculator, information and communication devices, automotive, appliance, game device, house ware, stationary and sporting goods. In these teachings, thermoplastic surface structures are used to increase heat deformation and result in highly three dimensional shapes. The printed layers are on the thermoplastic surface structures to provide stereoscopic printed visual effect in addition to the light guiding and lighting functions.

### Embodiments

Example embodiments of the present teachings are described below by way of seven examples. However, the present invention should be in no way restricted by the examples provided.

Light guiding decorative composite sheets were produced in the following process. The transparent substrate was a rubber modified polymethylmethacrylate (acrylic) or polycarbonate (PC). The rubber modified acrylic was chosen from 8N material supplied by Degussa in Germany or EXN from Sumitomo Company in Japan. The polycarbonate was LC1500 supplied by Idemitsu in Japan. The transparent substrate was extruded based on the conditions recommended by suppliers. The adhesive was a hot melt adhesive made of thermoplastic polyurethane (TPU) supplied by Great Eastern Resins Industry in Taiwan. Its melt temperature is between 80°C and 150°C. It is preferred to choose the hot melt adhesive with melt temperature at least 10°C lower than the molten resin temperature to be injected. It is preferred to choose the heat resistant layer with a softening temperature higher than 180°C.

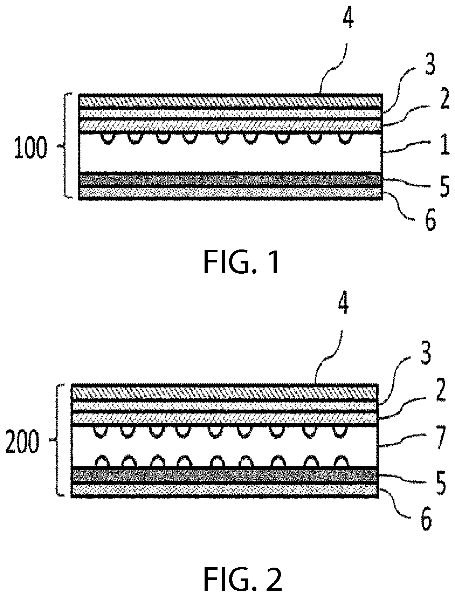

As shown in FIG. 1 and FIG. 2, a transparent substrate was an extruded acrylic film made of Degussa 8N. A roller carved with micro structures on the roller surface maintained temperature between 80°C and 120°C. The heated roller was pressed over the extruded acrylic film to transfer the microstructures over the acrylic film surface. The resulting film went through a chilling roller to set the microstructures on the film surface. It resulted in single sided structured transparent substrate 1. A heat resistant layer was coated on top of the set micro structures. The softening temperature of the heat resistant layer was higher than the temperature of second heated roller which was between 90°C and 150°C. The temperature of the second heated roller was 10°C to 30°C higher than the temperature of the first heated roller. Use the second heated roller over the other side of the plastic sheet to transfer the micro structures to the plastic sheet. It results in double sided structured transparent substrate 7. The microstructures can be selected from lines, prism, half spherical, half cylindrical, pyramidal, Fresnel structure or are a combination of two or more of the above.

### Embodiment 1

A transparent substrate was extruded from a T-die with rubber modified acrylic film made of Degussa 8N. A heated roller with many half spherical microstructures on surface was rolled over the rubber modified acrylic film. The roller temperature was between 80°C and 110°C, 90°C preferred. The resulting microlens structures were set by passing the film through a chilling roller to provide the single sided structured transparent substrate 1, as shown in FIG.1. The resulting microstructures have differences in lens density and surface height. The lens density is 0.01 lens/cm² with surface height difference of 5 microns at one side of the film and lens density is 0.8 lens/cm² with surface height difference of 80 microns at the other side. On the single sided structured transparent substrate 1 was coated surface treatment layer 2 which is an ultra violet (UV) curable base coat POLYCHEM #T3 50150E supplied by Poly Chem. in Taiwan. An adhesion layer 6 was heat melted laminated between 80°C and 150°C over the heat resistant layer 5. The adhesive is a polyurethane thermoplastic elastomer supplied by Great Eastern Resins Industry in Taiwan. A printed layer 3 was applied on surface treatment layer 2 by inkjet printing process, followed by applying an acrylic hard coating layer 4, supplied by Yu Zer Enterprise Co. in Taiwan, cured by infrared and UV to provide a surface in 3H pensile hardness. The process resulted in straight external printed decoration sheet 100.

### Embodiment 2

A transparent substrate was extruded from a T-die with rubber modified acrylic film made of Degussa 8N. A heated roller with many half spherical microstructures on surface rolled over the rubber modified acrylic film. The roller temperature was between 80°C and 110°C, 90°C preferred. The resulting microlens structures were set by passing the film through a chilling roller to provide the single sided structured transparent substrate 1. A heat resistant layer 5 made of polycarbonate (LC1500 supplied by Idemitsu) was coated on the microlens. Second heated roller temperature was between 100°C and 120°C which was generally 10°C to 30°C higher temperature of the first heated roller. Second heated roller rolled over the other side of the single sided structured transparent substrate 1 to provide the double sided structured transparent substrate 7, as shown in FIG. 2. The lens density is 0.01 lens/cm² with surface height difference of 5 microns at one side of the film and lens density is 0.8 lens/cm² with surface height difference of 80 microns at the other side. On one side of the double sided structured transparent substrate 7 was coated a surface treatment layer 2 which is an ultra violet (UV) curable base coat Polychem #T3 50150E supplied by Poly Chem. Co. in Taiwan. An adhesion layer 6 was heat melted laminated between 80°C and 150°C over the heat resistant layer 5. The adhesive is a polyurethane thermoplastic elastomer supplied by Great Eastern Resins Industry in Taiwan. A printed layer 3 was applied on surface treatment layer 2 by inkjet printing process, followed by applying an acrylic hard coating layer 4, supplied by Yu Zer Enterprise Co. in Taiwan, cured by infrared and UV to provide a surface in 3H pensile hardness. The process resulted in straight external printed decoration sheet 200.

### Embodiment 3

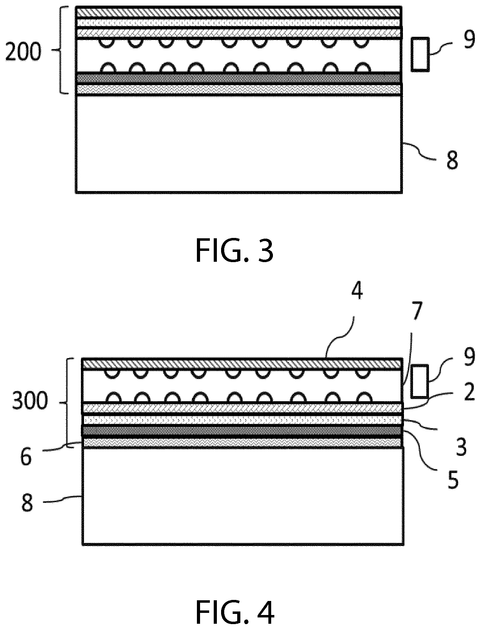

A transparent substrate was extruded from a T-die with polycarbonate (LC-1500) supplied by Idemitsu in Japan. A heated roller with many half spherical microstructures on surface rolled over the polycarbonate film. The roller temperature was between 70°C and 120°C, 90°C preferred. The resulting microlens structures were set by passing the film through a chilling roller. Second heated roller temperature was between 130°C and 180°C and rolled over the other side of the polycarbonate film to provide the double sided structured transparent substrate 7, as shown in FIG. 2. The lens density is 0.01 lens/cm² with surface height difference of 5 microns at one side of the film and lens density is 0.8 lens/cm² with surface height difference of 80 microns at the other side. On one side of the double sided structured transparent substrate 7 was coated a surface treatment layer 2 which is an ultra violet (UV) curable base coat Polychem #T3 50150E supplied by Poly Chem. Co. in Taiwan. A printed layer 3 was applied on surface treatment layer 2 by inkjet printing process, followed by heat laminating an adhesion layer 6 between 80°C and 150°C. The adhesive is a polyurethane thermoplastic elastomer supplied by Great Eastern Resins Industry in Taiwan. An acrylic hard coating layer 4, supplied by Yu Zer Enterprise Co. in Taiwan, was applied on the other side of double sided structured transparent substrate 7. It was cured by infrared and UV to provide a surface in 3H pensile hardness. The process resulted in straight inner printed decoration sheet 300, as shown in FIG. 4.

### Embodiment 4

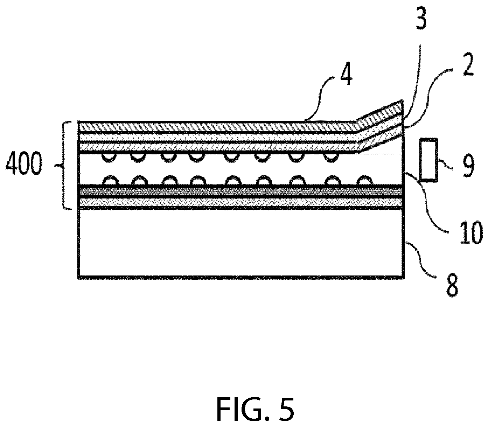

The process in Embodiment 2 was used, but the T-die was changed to an extrusion die with the one edge in trapezoid shape. The extruded film had a horn shape cross section. A narrow heated carved roller was used to avoid the horn shape area. The roller was carved with half spherical lenses. The rest of process was the same with Embodiment 2 to produce a horn shape decoration sheet 400, as shown in FIG. 5.

### Embodiment 5

Decoration sheets produced from Embodiments 1 to 4 were used, and the hard coating layer 4 was faced toward the mold surface. An acrylic resin of 8N supplied by Degussa, or acrylonitrile butadiene Styrene copolymers was injected into the mold cavity and adhered to the adhesion layer 6 to form a light guiding decorative plastic part 8, single sided structured plastic part 11 and double sided structured plastic part 13 respectively. Light source 9 of 4mm light emitting diodes (LEDs), 59-146UTD/TR8 supplied by Ever Lighting Corp. in Taiwan, were placed at one side of single sided structured transparent substrate 1 or double sided structured transparent substrate 7. The side with LEDs had less lens density and less height difference on the surface of transparent substrate. This process resulted in light guiding decorative components shown in FIG. 3 to 5.

### Embodiment 6

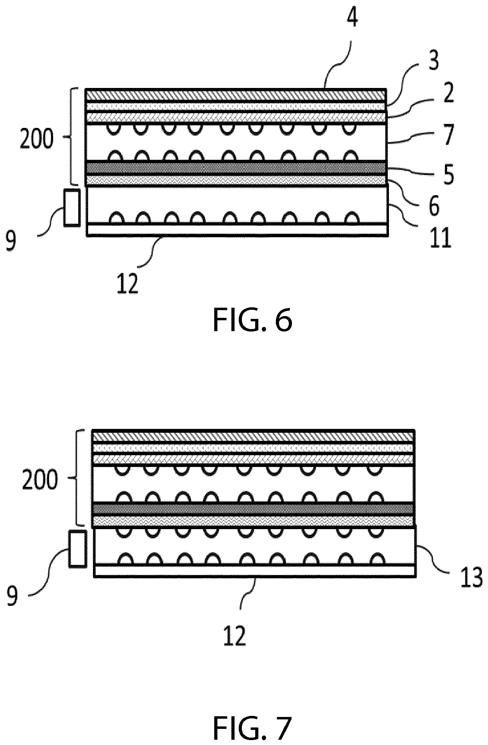

A match mold with one mold surface containing half spherical microstructure was used. The decorative composite sheets produced from Embodiment 1 to 4 were used with the hard coating layer 4 facing toward the mold surface without microstructures. Then the mold was closed. Rubber modified acrylic, 8N supplied by Degussa, or acrylonitrile butadiene styrene copolymers was injected into the mold cavity and adhered to the adhesive layer 6 to form a light guiding decorative plastic part. Light source 9 of 4mm light emitting diodes (LEDs), 59-146UTD/TR8 supplied by Ever Lighting Corp. in Taiwan, were placed at one side of single sided structured plastic part 11. The side with LEDs had less lens density and less height difference on the surface of plastic part. This process resulted in light guiding decorative component shown in FIG. 6.

### Embodiment 7

The decoration sheets produced from Embodiments 1 to 4 were used and adhered to pre-formed double sided structured plastic part 13 made of acrylic 8N supplied by Degussa. Light source 9 of 4mm light emitting diodes (LEDs), 59-146UTD/TR8 supplied by Ever Lighting Corp. in Taiwan, were placed at one side of double sided structured plastic part 13. The side with LEDs had less lens density and less height difference on the surface of plastic part. This process resulted in light guiding decorative components shown in FIG. 7.

Moreover, as those of skill in this art will appreciate, many modifications, substitutions and variations can be made in and to a method of making light guiding decorative composite sheet or components of these example embodiments without departing from its spirit and scope. In light of this, the scope of the present invention should not be limited to that of the particular embodiments illustrated and described herein, as they are only exemplary in nature, but instead, should fully commensurate with that of the claims appended hereafter and their equivalents.

## Claims

1. A light guiding decorative composite sheet comprising a transparent substrate with concave and convex surface structures,
wherein at least one edge of the transparent substrate is in horn shape at cross section and thicker than the center area,
wherein there are a printed layer and a hard coating layer on top of the concave and convex surface structures,
wherein an adhesive layer is on the other surface of the transparent substrate.

2. The light guiding decorative composite sheet of claim 1, wherein the transparent substrate has concave and convex surface structures on both sides of the transparent substrate with the surface height difference between 1µm and 100µm.

3. The light guiding decorative composite sheet of claim 1, wherein the concave and convex surface structures are selected from lines, prism, half spherical, half cylindrical, pyramidal, Fresnel structure or are a combination of two or more of the above.

4. The light guiding decorative composite sheet of claim 1, wherein the adhesive is a hot melt adhesive.

5. The light guiding decorative composite sheet of claim 1, wherein the edge thickness of the transparent substrate is equal or larger than the diameter of light emitting diode.

6. A light guiding decorative composite sheet comprising a transparent substrate with concave and convex surface structures,
wherein at least one edge of the transparent substrate is in horn shape at cross section and thicker than the center area,
wherein there are a printed layer on top of the concave, and convex surface structures and an adhesive layer on top of the printed layer, wherein a hard coating layer is on the other surface of the transparent substrate.

7. The light guiding decorative composite sheet of claim 6, wherein the transparent substrate also has concave and convex surface structures on both sides of the transparent substrate with the surface height difference between 1µm and 100µm.

8. The light guiding decorative composite sheet of claim 6, wherein the concave and convex surface structures are selected from lines, prism, half spherical, half cylindrical, pyramidal, Fresnel structure or are a combination of two or more of the above.

9. The light guiding decorative composite sheet of claim 6, wherein the adhesive is a hot melt adhesive.

10. The light guiding decorative composite sheet of claim 6, wherein the edge thickness of the transparent substrate is equal or larger than the diameter of light emitting diode.

11. A light guiding decorative component utilizing the light guiding decorative composite sheet of claim 1 or claim 6 wherein the hard coating layer faces a mold surface and a transparent resin is injected onto the adhesive layer to provide a light guiding decorative injected plastic part,
wherein light emitting diodes are placed next to horn shape edge of transparent substrate,
wherein the density of concave and convex surface structures is not uniform, less structures at the diode side,
wherein a heat resistant layer is located between the adhesive layer and the transparent substrate,
wherein the heat distortion temperature of the heat resistant layer is at least 10°C higher than the injected resin temperature.

12. The light guiding decorative component of claim 11 wherein the heat resistant layer has light reflective effect and is selected from translucent material, material with metal powder containing, metalized sheet or high refraction index coating materials.

13. The light guiding decorative component of claim 11 wherein the transparent resin is selected from polymethylmethacrylate or acrylonitrile butadiene Styrene copolymers,
wherein the heat resistant layer is polycarbonate, polyurethane or acrylonitrile butadiene styrene copolymers.

14. A light guiding decorative component utilizing the light guiding decorative composite sheet of claim 1 or claim 6 wherein the hard coating layer faces a mold surface and a transparent resin is injected onto the adhesive layer to provide a light guiding decorative injected plastic part,
wherein the transparent resin duplicates the lens structures from the other side of the mold,
wherein light emitting diodes are placed next to the resin injected plastic part,
wherein the density of lens structures is not uniform, less structures at the diode side,
wherein a heat resistant layer is located between the adhesive layer and the transparent substrate,
wherein the heat distortion temperature of the heat resistant layer is at least 10°C higher than the injected resin temperature.

15. The light guiding decorative component of claim 14 where the edges of the injected plastic part also duplicate the lens structures from the mold.

16. The light guiding decorative component of claim 14 wherein the transparent resin is selected from polymethylmethacrylate or acrylonitrile butadiene styrene copolymers,
wherein the heat resistant layer is polycarbonate, polyurethane or acrylonitrile butadiene styrene copolymers.

17. The light guiding decorative component of claim 14 wherein the heat resistant layer has light reflective effect and is selected from translucent material, material with metal powder containing, metalized sheet or high refraction index coating materials.

18. A light guiding decorative component utilizing the light guiding decorative composite sheet of claim 1 or claim 6 wherein the adhesive layer is bonded to the surface of a light guiding plastic part, wherein light emitting diodes are placed next to the horn shape edge of the transparent substrate,
wherein the density of concave and convex surface structures is not uniform, less structures at the diode side.

19. A light guiding decorative component utilizing the light guiding decorative composite sheet of claim 1 or claim 6 wherein the adhesive layer is bonded to the surface of a light guiding plastic part, wherein there are pre-formed lens structures at one side or both sides of the light guiding plastic part,
wherein light emitting diodes are placed next to the light guiding plastic part,
wherein the density of the lens structures is not uniform, less structures at the diode side.

20. A method of manufacturing a transparent substrate with concave and convex surface structures of claim 1 comprising:
using a roller carved with micro structures on the roller surface,
maintaining the roller temperature ± 20°C higher than the softening temperature of a plastic sheet,
pressing the heated roller over one side of the plastic sheet to duplicate the micro structures to the plastic sheet,
passing the resulting plastic sheet over a chilling roller to set the micro structures to provide single sided structured transparent substrate,
followed by coating a heat resistant layer on top of the micro structures wherein the softening temperature of the heat resistant layer is at least 10°C higher than the temperature of second heated roller, wherein the second heated roller is also carved with micro structures on the roller surface,
maintaining the temperature of the second heated roller 10°C to 30°C higher than the temperature of the first heated roller,
pressing the second heated roller over the other side of the plastic sheet to duplicate the micro structures to the plastic sheet,
passing the resulting plastic sheet over a chilling roller to set the micro structures to provide double sided structured transparent substrate.

21. The transparent substrate with concave and convex surface structures made from claim 20 wherein the microstructures are selected from lines, prism, half spherical, half cylindrical, pyramidal, Fresnel structure or are a combination of two or more of the above.
